# EUROPÄISCHE PATENTANMELDUNG

(11) **EP 4 383 028 A1**
(43) Veröffentlichungstag der Anmeldung: **12.06.2024**
(21) Anmeldenummer: 23212903.1
(22) Anmeldetag: 29.11.2023
(51) Int. Cl.: G05B 19/4093

(54) **VERFAHREN ZUR COMPUTER-GESTÜTZTEN ASSISTENZ BEI EINER EINSTELLUNG WENIGSTENS EINES PARAMETERS WENIGSTENS EINER TEXTILMASCHINE**

(30) Priorität: 07.12.2022 LU 503148
(71) Anmelder: Saurer Spinning Solutions GmbH & Co. KG, 52531 Übach-Palenberg (DE)
(72) Erfinder: Gais, Ulrich, 58313 Herdecke (DE)
(74) Vertreter: Morgenthum-Neurode, Mirko

(57) **Zusammenfassung**

Die Erfindung betrifft Verfahren (100) zur computer-gestützten Assistenz bei einer Einstellung wenigstens eines Parameters wenigstens einer Textilmaschine (1), umfassend die nachfolgenden Schritte: Ermitteln (101) einer Eingabe eines Benutzers, wobei die Eingabe aus einer Bedienung einer grafischen Benutzeroberfläche (200) für die Einstellung des wenigstens einen Parameters resultiert; Ermitteln (102) eines Kontextes der Bedienung zumindest auf Basis der ermittelten Eingabe, wobei der Kontext zumindest eine Zuordnung der Bedienung zu dem wenigstens einen Parameter spezifiziert; Ermitteln (103) einer Unterstützungsinformation (220) zumindest auf Basis des ermittelten Kontextes, wobei die Unterstützungsinformation (220) zur Assistenz des Benutzers für die Einstellung des wenigstens einen Parameters vorgesehen ist; Ausführen (104) einer Assistenzfunktion, bei welcher eine Ausgabe der ermittelten Unterstützungsinformation (220) für den Benutzer initiiert wird.

## Beschreibung

Die vorliegende Erfindung betrifft ein Verfahren zur computer-gestützten Assistenz bei einer Einstellung wenigstens eines Parameters einer Textilmaschine. Ferner bezieht sich die Erfindung auf ein System, ein Computerprogramm sowie eine Vorrichtung zu diesem Zweck.

### Stand der Technik

Es ist aus dem Stand der Technik bekannt, dass auf grafischen Benutzeroberflächen (GUI) ein Hilfetext ausgegeben werden kann, um einen Benutzer bei der Bedienung der grafischen Benutzeroberfläche zu unterstützen. So sind bspw. Tooltips bekannt, bei welchen ein kleines Pop-up-Fenster in Anwendungsprogrammen oder Webseiten angezeigt wird. Nach dem Antippen eines Elements der GUI oder bei einem Verweilen des Mauszeigers darauf kann eine kurze Beschreibung zu dem Element angezeigt werden. Ferner sind auch kontextsensitive Hilfen bekannt, bei welchen der Auslöser das Antippen oder Auswählen eines Menüpunktes (wie ein "?") und das anschließende Auswählen des gewünschten Elements sein kann.

Allerdings ist es ein Nachteil bekannter Lösungen, dass solche Hilfen bewusst vom Bediener ausgewählt werden müssen und in der Regel nur eine Kurzbeschreibung des angewählten Elements in Stichworten umfassen. Von einer Assistenz kann in solchen Fällen daher nicht gesprochen werden.

### Offenbarung der Erfindung

Es ist eine Aufgabe der vorliegenden Erfindung, die voranstehend beschriebenen Nachteile des Stands der Technik zumindest teilweise zu beheben. Insbesondere ist es eine Aufgabe der vorliegenden Erfindung, eine verbesserte und/oder alternative Lösung zur Assistenz eines Benutzers bei einer Einstellung von Textilmaschinen vorzuschlagen.

Gegenstand der Erfindung ist ein Verfahren mit den Merkmalen des Anspruchs 1, ein System mit den Merkmalen des Anspruchs 13, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, dem erfindungsgemäßen Computerprogramm sowie der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zur computer-gestützten Assistenz bei einer Einstellung wenigstens oder genau eines Parameters wenigstens oder genau einer Textilmaschine. Es kann die Assistenz optional auch bei der Einstellung wenigstens eines Parameters mehrerer Textilmaschinen vorgesehen sein, z. B. bei einer Spinnerei oder dergleichen. So ist es üblich, dass für die Textilproduktion, bspw. eines Garns, mehrere Textilmaschinen zum Einsatz kommen. Auch ist es möglich, dass die Assistenz bei der Einstellung mehrerer Parameter der wenigstens einen Textilmaschine erfolgt, vorzugsweise unterschiedlicher Parameter. So kann die Einstellung einer Vielzahl von Parametern die Qualität und Produktivität bei der Textilproduktion bestimmen.

Es können die nachfolgenden Schritte vorgesehen sein, welche vorzugsweise nacheinander und/oder wiederholt ausgeführt werden:
- Ermitteln einer Eingabe eines Benutzers, wobei die Eingabe aus einer Bedienung einer grafischen Benutzeroberfläche für die Einstellung des wenigstens einen Parameters resultieren kann,
- Ermitteln eines Kontextes der Bedienung zumindest auf Basis der ermittelten Eingabe, wobei der Kontext zumindest eine Zuordnung der Bedienung zu dem wenigstens einen Parameter spezifizieren kann, z. B. dadurch, dass ein durch den Benutzer eingegebener Einstellwert für den wenigstens einen Parameter ermittelt wird und/oder der wenigstens eine Parameter für den Einstellwert anhand einer Maschinenspezifikation identifiziert wird,
- Ermitteln einer Unterstützungsinformation zumindest auf Basis des ermittelten Kontextes, wobei die Unterstützungsinformation zur Assistenz des Benutzers für die Einstellung des wenigstens einen Parameters vorgesehen sein kann,
- Ausführen einer Assistenzfunktion, bei welcher eine Ausgabe der ermittelten Unterstützungsinformation für den Benutzer initiiert werden kann.

Dies ermöglicht es, kontextabhängig unter Berücksichtigung des einzustellenden Parameters die Unterstützungsinformation auszugeben. In anderen Worten wird nicht (nur) ein Bedienhinweis für die grafische Benutzeroberfläche (kurz GUI oder engl. graphical user interface) ausgegeben, sondern es wird eine darüberhinausgehende Assistenz für die Einstellung des Parameters bereitgestellt. Dies bedeutet, dass der Benutzer für die Einstellung des wenigstens einen Parameters mittels der Unterstützungsinformation angeleitet werden kann. Die Assistenzfunktion kann daher auch als "Ratgeber" verstanden werden, um den Benutzer Empfehlungen oder Hinweise zu Eingaben und Anzeigen der GUI zu vermitteln und die Auswirkungen von Eingaben und Änderungen des wenigstens einen Parameters zu erläutern. Hierbei kann die Unterstützungsinformation auch technisches und/oder textil-technologisches Hintergrundwissen umfassen. Somit kann auch eine sichere Bedienung und Einstellung der Textilmaschine durch unerfahrene Benutzer gewährleistet werden. Ferner kann ein Grad der Unterstützung auch in Abhängigkeit von einer Erfahrung des Benutzers ermöglicht werden, wie es nachfolgend noch mit weiteren Einzelheiten beschrieben wird.

Die Textilmaschine kann z. B. als eine Rotorspinnmaschine, z. B. eine Offenend-Rotorspinnmaschine und/oder eine halbautomatische Rotorspinnmaschine, oder als eine Luftspinnmaschine oder als eine Maschine für einen Spinnprozess, wie ein Streckwerk, ausgebildet sein. Auch ist es möglich, dass mehrere und ggf. unterschiedliche Textilmaschinen vorgesehen sind, also insbesondere unterschiedlichen Typs, dessen Parameter vorzugsweise über eine einzige GUI eingestellt werden. Auch ist es möglich, dass der wenigstens eine Parameter unterschiedliche Parameter umfasst, welche ebenfalls über eine einzige GUI eingestellt werden können. Unter GUI kann im Rahmen der Erfindung eine grafisch dargestellte und elektronisch generierte Oberfläche verstanden werden, welche ggf. unterschiedliche Ansichten und/oder Menüs und/oder Fenster und/oder Bedienelemente und/oder Formulare aufweist, damit ein Benutzer die Einstellung des wenigstens einen Parameter an der GUI vornehmen kann. Hierzu kann die GUI z. B. auf einem Bildschirm wie einem Touchscreen angezeigt werden. Der Bildschirm kann dabei Teil eines Computers wie einer erfindungsgemäßen Vorrichtung sein. Auch kann der Bildschirm optional Teil der Textilmaschine sein.

Ein weiterer Vorteil kann im Rahmen der Erfindung erzielt werden, wenn das Ermitteln des Kontextes zumindest einen der nachfolgenden Schritte umfasst:
- Identifizieren einer Maschinenspezifikation über die Textilmaschine und/oder über eine Produktion der Textilmaschine, wobei die Maschinenspezifikation für einen Maschinenparameter, vorzugsweise eine Konfiguration und/oder einen Aufbau der Textilmaschine, und/oder für einen Produktionsparameter der Produktion spezifisch ist,
- Ermitteln einer Statusspezifikation, wobei die Statusspezifikation für einen aktuellen Status der Textilmaschine und/oder der Produktion spezifisch ist, und vorzugsweise aus einer Messung durch einen Sensor an der Textilmaschine resultiert.

Auf diese Weise kann der Kontext für die identifizierte Maschinenspezifikation und/oder die ermittelte Statusspezifikation spezifisch sein, wobei vorzugsweise die Unterstützungsinformation in Abhängigkeit von der Maschinenspezifikation und/oder der Statusspezifikation generiert wird.

Die Textilmaschine bzw. die Produktion kann z. B. dazu ausgeführt sein, einen Garn zu produzieren. Beim Rotorspinnen kann die Garnbildung bspw. in der Rotorrille des Spinnrotors erfolgen. Hier kann den abgelegten Fasern infolge des Torsionsmoments des umlaufenden Garnendes Drehung erteilt werden. Diese Drehung kann die für den Garnabzug notwendige Garnfestigkeit erzeugen. Beim Abzug des Garnes aus der Rotorrille muss der Faden insbesondere eine Festigkeit aufweisen, welche größer ist als die durch den Garnumlauf erzeugte Zentrifugalkraft im Rotor. Anderenfalls kann der Faden bereits im Bereich des Rotors reißen. Dabei kann bei nahezu konstanter Reißkraft die Zentrifugalkraft des umlaufenden Garnendes bei einer zunehmenden Rotordrehzahl quadratisch ansteigen. Damit führt eine Verdopplung der Rotordrehzahl zu einer vierfachen Fadenspannung im Bereich des Rotors. Die Gefahr des Fadenbruches im Bereich des Rotors kann somit mit der Steigerung der Rotordrehzahl zunehmen. Die Geschwindigkeit mit der das Garn produziert wird und damit die Produktivität der Offenend-Rotorspinnmaschine steigen mit zunehmender Rotordrehzahl. Deshalb ist es häufig wünschenswert, dass die Spinnrotoren mit der maximal möglichen Drehzahl betrieben werden. Hier kann die Assistenz dabei unterstützen, die optimalen Parameter für den Betrieb der Textilmaschine zu wählen.

Es ist außerdem denkbar, dass die Statusspezifikation eine Anforderung an die Produktion umfasst, z. B. Garneigenschaften wie Garnfeinheit und Garndrehung. Der Qualitätsparameter beschreibt z. B. Abweichungen von vorgegebenen Garneigenschaften.

Ferner kann die Fadenbruchrate, die beim Betrieb einer Offenend-Rotorspinnmaschine akzeptiert werden kann, von der Anzahl der zur Verfügung stehenden Mittel zur Fadenbruchbehebung abhängen. Die Fadenbruchrate ist dabei insbesondere die Anzahl der Fadenbrüche bezogen auf die Betriebszeit der Textilmaschine, vorzugsweise einer Offenend-Rotorspinnmaschine bzw. einer Arbeitsstelle. Der Fadenbruch kann durch einen Anspinner behoben werden. Das Anspinnen kann halbautomatisch erfolgen, das heißt, dass für das Anspinnen ein Bediener erforderlich ist. Das Anspinnen kann auch mittels eines Anspinnwagens automatisch erfolgen. Es sind auch Maschinen bekannt, bei denen das Anspinnen autark an einer Arbeitsstelle automatisch durchgeführt werden kann. Im ersten Fall hängt die Anzahl der akzeptierbaren Fadenbrüche von der Anzahl der zur Verfügung stehenden Bediener ab. Im zweiten Fall wird die zulässige Fadenbruchrate von der Anzahl der Anspinnwagen bestimmt. Beim autarken Anspinnen an den Arbeitsstellen ist insbesondere von Bedeutung, wie viele Anspinner parallel durchgeführt werden können, ohne dass eine ausreichende Unterdruckversorgung beeinträchtigt wird. Aufgrund der beschriebenen Bedingungen kann eine maximal zulässige Fadenbruchzahl festgelegt werden.

Die akzeptierbare Fadenbruchrate und/oder die maximal zulässige Fadenbruchzahl kann z. B. in der Maschinenspezifikation angegeben sein. Auch kann die Anzahl der zur Verfügung stehenden Mittel zur Fadenbruchbehebung durch die Maschinenspezifikation angegeben sein.

Der Sensor kann z. B. als ein Garnreiniger ausgebildet sein. Ein Garnreiniger kann während der Produktion des Garns messbare Eigenschaften des Garns erfassen. Auf diese Weise können Garnfehler ermittelt werden.

Außerdem kann es im Rahmen der Erfindung von Vorteil sein, dass das Ermitteln des Kontextes zumindest einen der nachfolgenden Schritte umfasst:
- Auswerten der Eingabe hinsichtlich der Bedienung in der Form einer Berührung eines Touchscreens und/oder in der Form einer Mauszeiger-Position und/oder einer Betätigungsposition auf der grafischen Benutzeroberfläche,
- Ermitteln und Auswerten von der Eingabe vorangegangenen Eingaben, in anderen Worten historischen Eingaben und/oder einen zeitlichen Verlauf von Eingaben des Benutzers,
- Ermitteln und Auswerten einer aktuellen Einstellung des wenigstens einen Parameters,
- Ermitteln und Auswerten eines durch die Eingabe mitgeteilten Änderungswunsches des Benutzers für die Einstellung des wenigstens einen Parameters,
- Ermitteln und Auswerten eines Status der Textilmaschine, vorzugsweise eines Betriebsstatus und/oder eines Status einer Produktion der Textilmaschine und/oder eines Produktionsfortschritts,
- Ermitteln und Auswerten eines Qualitätsparameters einer Produktion der Textilmaschine,
- Ermitteln und Auswerten eines Benutzerparameters, vorzugsweise einer Erfahrung und/oder Qualifikation des Benutzers, wobei der Benutzerparameter bevorzugt auf Basis des Status und/oder des Qualitätsparameters, vorzugsweise automatisch, ermittelt wird, bevorzugt anhand einer, insbesondere gemessenen, Fehlerrate, insbesondere einer Fadenbruchrate bei der Produktion.

Damit ist es möglich, der Ermittlung des Kontexts und somit ggf. auch der Generierung der Unterstützungsinformation eine Vielzahl von Faktoren zugrunde zu legen, welche den aktuellen Kontext der Bedienung an der Textilmaschine und bei der Produktion repräsentieren. Der Kontext bezieht sich somit insbesondere nicht (nur) auf die Bedienung an der GUI, sondern auf den Kontext zu einem aktuellen Status der Produktion der Textilmaschine.

Es kann optional möglich sein, dass der wenigstens eine Parameter zumindest einen oder mehrere der folgenden Parameter umfasst:
- eine Produktionsgeschwindigkeit,
- eine Abzugsgeschwindigkeit,
- eine Rotordrehzahl,
- eine Einspeisungsgeschwindigkeit,
- einen Spinndruck oder Spinnunterdruck.

Somit ist es möglich, durch die GUI eine Vielzahl für die Produktion wesentlicher Einstellungen vorzunehmen.

Der wenigstens eine (einzustellende) Parameter kann z. B. eine Garneigenschaft umfassen und/oder sich auf Garneigenschaften auswirken. Die Garneigenschaften sind z. B. Garnfeinheit und Garndrehung. Außerdem beeinflusst das verwendete Rohmaterial die Garneigenschaften. Die Garneigenschaften können vorzugsweise auch durch Maschinen- und/oder Produktionsparameter vorgegeben werden. Zu dem Maschinen- und/oder Produktionsparameter gehören insbesondere die Spinnmittel, wie Spinnrotoren, Auflösewalzen und Abzugsdüsen bzw. Spinndüsen. Außerdem spielt der Spinnunterdruck bzw. Spinndruck, der mittels der Spinneinrichtung erteilte Verzug und die erteilte Drehung eine Rolle. Bei der Offenend-Rotorspinnmaschine kommt es auf das Verhältnis von Abzugsgeschwindigkeit, Faserbandzuführung und Rotordrehzahl an. Bei der Luftdüsenspinnmaschine ist es das Verhältnis von Spinndruck und Liefergeschwindigkeit.

Qualitätsparameter beschreiben vorzugsweise Abweichungen von vorgegebenen Garneigenschaften. Zur Optimierung der Herstellung des Garns werden besonders vorzugsweise der CV-Wert und/oder IPI-Werte als Qualitätsparameter verwendet. Der CV-Wert ist dabei ein Maß für die Gleichmäßigkeit des Garns, je ungleichmäßiger das Garn ist, desto höher ist der CV-Wert. Die IPI-Werte sind sogenannte häufige Garnfehler (Imperfektionen), die einzeln betrachtet nicht als störend beurteilt werden. Sie liegen größtenteils unterhalb des in einer sogenannten Kurzfehler-Matrix aktivierten Ausreinigungsbereichs. Es können IPI-Werte für Dickstellen, Dünnstellen und Neps angegeben werden.

Es kann ferner möglich sein, dass die Eingabe einen Einstellwert für den wenigstens einen Parameter umfasst, wobei der nachfolgende Schritt vorgesehen ist:
- Initiieren einer Änderung, vorzugsweise Anpassung, des wenigstens einen Parameters oder eines weiteren Parameters bei der Textilmaschine gemäß dem Einstellwert, um eine Produktion der Textilmaschine mit dem wenigstens einen geänderten Parameter durchzuführen.

Dabei kann die Bedienung eine Betätigung eines Bedienelements, vorzugsweise eines Eingabeelements oder einer Eingabemaske, der grafischen Benutzeroberfläche für die Eingabe des Einstellwertes umfassen. Auch ist es möglich, dass die Bedienung eine Bewegung oder ein Einbringen eines Mauszeigers in einen vordefinierten Bereich der GUI umfasst. Die Bedienung in der Form einer Bewegung und/oder eines Einbringens eines Mauszeigers und/oder einer anderen Aktion wie die Betätigung des Bedienelements kann softwaretechnisch erfasst werden, um die Eingabe auszulösen. Die Bedienung, wie ein Anklicken und/oder Verweilen des Mauszeigers in dem vordefinierten Bereich und/oder ein Eingeben von Einstellwerten über eine Tastatur oder dergleichen, kann zu einer Initiierung der Eingabe führen. Ferner kann die Eingabe dazu führen, dass automatisch die Assistenzfunktion ausgeführt wird. Bspw. wird auf diese Weise auch - ohne zusätzliche Benutzeraktion - die Unterstützungsinformation ausgegeben. Somit kann auch ohne bewusste Aktivierung durch den Benutzer die Assistenz ermöglicht werden. Weiter kann die Eingabe Informationen umfassen, welche Art der Bedienung zur Auslösung geführt hat.

Es kann im Rahmen der Erfindung vorgesehen sein, dass die Eingabe einen Einstellwert für den wenigstens einen Parameter umfasst. Dabei kann das Ausführung der Assistenzfunktion den nachfolgenden Schritt umfasst:
- Automatisches Anpassen, bevorzugt Korrigieren, des Einstellwertes und/oder eines weiteren Einstellwertes wenigstens eines weiteren Parameters der Textilmaschine zumindest auf Basis des ermittelten Kontextes.

Der wenigstens eine Parameter ist z. B. die Produktionsgeschwindigkeit und/oder ein dafür spezifischer Parameter wie eine Rotordrehzahl, welche mittels des Einstellwertes festgelegt werden kann. Als spezifischer Parameter zur Einstellung der Produktionsgeschwindigkeit bei einer Offenend-Rotorspinnmaschine kommt vor allem die Rotordrehzahl in Betracht. Damit die Garneigenschaften erhalten bleiben, müssen insbesondere Einspeisung und Abzugsgeschwindigkeit (als der wenigstens eine weitere Parameter) entsprechend angepasst werden. Bei einer Luftspinnmaschine kann als spezifischer Parameter zur Einstellung der Produktionsgeschwindigkeit die Liefergeschwindigkeit gewählt werden. Der Spinndruck (als der wenigstens eine weitere Parameter) wird zur Beibehaltung der Garneigenschaften der Liefergeschwindigkeit ggf. entsprechend angepasst. In beiden Fällen kann die Assistenzfunktion ggf. eine entsprechende Unterstützung z. B. durch eine automatische Durchführung der Anpassung und/oder durch die Ausgabe entsprechender Hinweise zur Anleitung der Anpassung mittels der Unterstützungsinformation durchführen. Für die automatische Anpassung kann die Assistenzfunktion bspw. auf ein vordefiniertes Regelwerk zurückgreifen.

Ein weiterer Vorteil im Rahmen der Erfindung ist erzielbar, wenn die Unterstützungsinformation zumindest einen Hinweis und/oder eine Empfehlung zur Einstellung des wenigstens einen Parameters, vorzugsweise zur Verwendung eines Bedienelements der grafischen Benutzeroberfläche, umfasst und bevorzugt textil-technologisches Hintergrundwissen im Zusammenhang mit einer aktuellen Produktion der Textilmaschine umfasst. Bspw. kann auf diese Weise angegeben werden, welche Auswirkungen die Einstellung auf die Produktion hat.

Ferner ist es optional vorgesehen, dass die Eingabe einen Einstellwert für den wenigstens einen Parameter umfasst, wobei der nachfolgende Schritt vorgesehen ist:
- Ermitteln, vorzugsweise Simulieren, einer Auswirkung der Einstellung des wenigstens einen Parameters entsprechend dem Einstellwert,
wobei das Ermitteln der Unterstützungsinformation auf Basis der ermittelten Auswirkung erfolgen kann und vorzugsweise die Unterstützungsinformation die Auswirkung angibt. Somit kann vor der tatsächlichen Durchführung der Einstellung zunächst getestet werden, in welcher Weise sich die Einstellung auf die Produktion auswirken würde.

Ein weiterer Vorteil kann im Rahmen der Erfindung erzielt werden, wenn die Unterstützungsinformation in Abhängigkeit von dem ermittelten Kontext aus einer Datensammlung, vorzugsweise einer elektronischen Datenbank und/oder einer Wissensdatenbank, vorzugsweise über ein Netzwerk, abgerufen wird. Bspw. kann die Unterstützungsinformation, ggf. aber auch die Maschinenspezifikation und/oder der Benutzerparameter, über das Netzwerk wie ein Internet abgerufen werden.

Weiter ist im Rahmen der Erfindung denkbar, dass der nachfolgende Schritt vorgesehen ist:
- Ermitteln eines Benutzerparameters, welcher für eine Erfahrung und/oder Qualifikation des Benutzers (der GUI) spezifisch ist,
wobei das Ermitteln des Kontextes basierend auf den ermittelten Benutzerparameter durchgeführt werden kann, sodass ein Umfang der Unterstützungsinformation von dem ermittelten Benutzerparameter abhängig ist. Somit kann automatisch und/oder vordefiniert der Benutzerparameter festgelegt werden, um in Abhängigkeit von dem Benutzerparameter den Umfang der Unterstützung durch die Assistenzfunktion zu definieren. Optional kann auch der Benutzerparameter anhand der Bedienung durch den Benutzer und einer Ermittlung der Resultate dieser Bedienung wie einer Fehlerrate (bspw. einer Fadenbruchzahl) automatisch ermittelt werden.

Zudem ist im Rahmen der Erfindung denkbar, dass das Ausführen der Assistenzfunktion die nachfolgenden Schritte umfasst:
- Identifizieren eines Einstellungsvorschlages basierend auf dem ermittelten Kontext,
- Initiieren der Ausgabe der Unterstützungsinformation, wobei die Unterstützungsinformation den Einstellungsvorschlag umfasst,
- Ermitteln einer durch den Benutzer eingegebene Bestätigung des Einstellungsvorschlags, um die Einstellung entsprechend dem Einstellvorschlag vorzunehmen.

In anderen Worten kann der Benutzer aufgefordert werden, den Einstellungsvorschlag wie einen konkreten Einstellwert für den wenigstens einen Parameter zu akzeptieren und damit die entsprechende Einstellung an der Textilmaschine einzuleiten. Ferner kann eine durch den Benutzer eingegebene Ablehnung des Einstellungsvorschlags ermittelt wird, und basierend auf der Ermittlung der Ablehnung der Einstellvorschlag angepasst und/oder verworfen wird. Dies ermöglicht es, benutzergesteuert die Assistenz durchzuführen.

Es ist ferner denkbar, dass die Ausgabe der ermittelten Unterstützungsinformation für den Benutzer als eine Ausgabe einer Gestalt initiiert wird, welche, vorzugsweise in einem Bereich um ein Bedienelement, auf der grafischen Benutzeroberfläche visualisiert wird. Damit ist eine deutlich erkennbare und sichere Assistenz des Benutzers über die GUI möglich.

Ebenfalls Gegenstand der Erfindung ist ein System, aufweisend eine Textilmaschine sowie eine Anzeigevorrichtung zur Darstellung und vorzugsweise Bedienung der grafischen Benutzeroberfläche. Ferner kann eine Vorrichtung zur Datenverarbeitung Teil des Systems sein. Die Vorrichtung kann Mittel zur Ausführung des erfindungsgemäßen Verfahrens umfassen. Damit bringt das erfindungsgemäße System die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind. Die Vorrichtung kann Teil der wenigstens einen Textilmaschine sein.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der wenigstens eine Computer kann eine Datenverarbeitungsvorrichtung, bspw. die erfindungsgemäße Vorrichtung, vorgesehen sein, welche das Computerprogramm ausführt. Der wenigstens eine Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der wenigstens eine Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der wenigstens eine Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der wenigstens eine Computer als ein oder mehrere Steuergeräte, d. h. auch als ein System aus Steuergeräten, ausgeführt sein. Der wenigstens eine Computer kann bspw. auch zumindest teilweise in einer Cloud und/oder als ein Server vorgesehen sein, um über die Schnittstelle die Datenverarbeitung für eine lokale Anwendung zur Verfügung zu stellen. Auch ist es möglich, dass der wenigstens eine Computer ein mobiles Gerät, wie ein Smartphone, umfasst.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den wenigstens einen Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Fig. 1 schematisch ein Verfahren gemäß Ausführungsbeispielen der Erfindung.
Fig. 2 schematisch weitere Einzelheiten von Ausführungsbeispielen der Erfindung.

In den nachfolgenden Figuren werden für die gleichen technischen Merkmale auch von unterschiedlichen Ausführungsbeispielen die identischen Bezugszeichen verwendet.

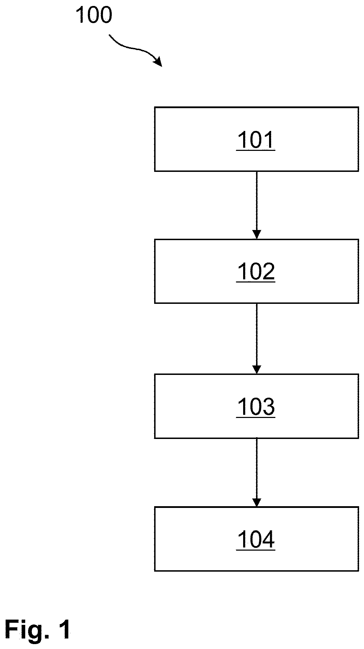

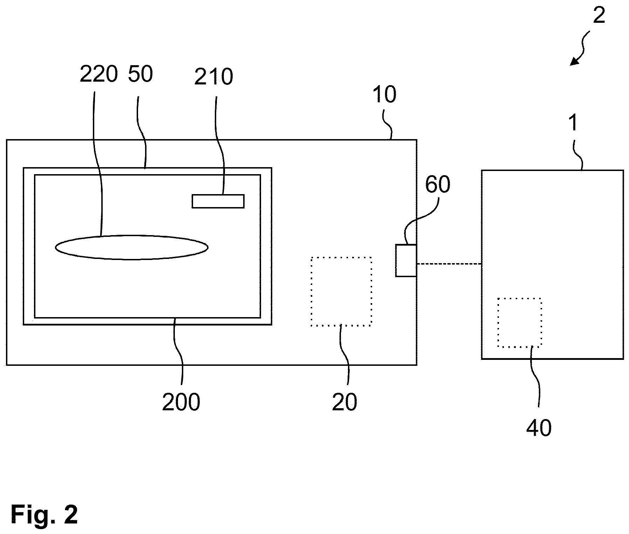

In Figur 1 ist ein Verfahren 100 gemäß Ausführungsbeispielen der Erfindung zur computer-gestützten Assistenz bei einer Einstellung wenigstens eines Parameters einer Textilmaschine 1 visualisiert. Das Verfahren 100 kann z. B. durch ein in Figur 2 schematisch dargestelltes Computerprogramm 20 bereitgestellt werden, welches zur Durchführung des Verfahrens 100 von wenigstens einem Computer 10 ausgeführt wird. Der wenigstens eine Computer 10 kann dabei als eine erfindungsgemäße Vorrichtung 10 ausgebildet sein. Ferner kann der wenigstens eine Computer 10 einen stationären Server und/oder einen Personalcomputer (PC) und/oder einen mobilen Computer, wie ein Laptop oder Tablet umfassen. Es ist darüber hinaus möglich, dass der oder wenigstens einer der Computer 10 in einer Cloud vorgesehen ist, um das Verfahren 100 zumindest teilweise cloudbasiert über das Internet bereitzustellen. Der wenigstens eine Computer 10 kann ferner eine Anzeigevorrichtung wie ein Display oder Touchscreen und/oder eine Eingabevorrichtung wie das Touchscreen und/oder eine Maus und/oder eine Tastatur aufweisen, um eine Ein- und Ausgabe für einen Benutzer zu ermöglichen. Im in Figur 2 gezeigten Ausführungsbeispiel sind Anzeige- und Eingabevorrichtung als kombinierte Vorrichtung 50 wie ein Touchscreen dargestellt.

Gemäß einem ersten Verfahrensschritt 101 erfolgt eine Ermittlung einer Eingabe eines Benutzers. Die Eingabe kann hierzu aus einer Bedienung einer grafischen Benutzeroberfläche 200 (GUI) für die Einstellung des wenigstens einen Parameters resultiert, wobei die GUI 200 in Figur 2 schematisch dargestellt ist und durch die Anzeigevorrichtung 50 ausgegeben wird. Die Bedienung kann bspw. eine Berührung eines Touchscreens und/oder die Bewegung eines Mauszeigers durch eine Computermaus und/oder eine Tasteneingabe und/oder dergleichen umfassen. Auch ist es denkbar, dass die Bedienung ein Betätigen eines Bedienelements 210 der GUI 200 umfasst, z. B. ein Antippen und/oder Anklicken eines grafisch dargestellten Buttons und/oder Textelementes. In der GUI 200 können verschiedene Formularfelder oder dergleichen vorgesehen sein, um Einstellwerte für den wenigstens einen Parameter der Textilmaschine 1 einzugeben. Die Bedienung kann z. B. die Eingabe eines Einstellwertes und/oder eine Aktivierung einer Assistenzfunktion über die GUI 200 umfassen. Die GUI kann ggf. auch über eine Website dargestellt werden, z. B. bereitgestellt zumindest teilweise durch eine Ausführung eines HTML (Hypertext Markup Language) Codes und/oder eines PHP oder Python Scripts. Es ist denkbar, dass durch die Eingabe, vorzugsweise durch die Betätigung von Bedienelementen 210, wenigstens ein Steuerbefehl für die Textilmaschine 1 über eine Hardwareschnittstelle 60 der Vorrichtung 10 ausgegeben wird. Die Hardwareschnittstelle 60 kann in Datenverbindung mit der Textilmaschine 1 stehen (in Figur 2 dargestellt durch eine gestrichelte Linie), um den Steuerbefehl an die Textilmaschine 1 zu übertragen. Der Steuerbefehl kann z. B. dazu führen, dass der wenigstens eine Parameter der Textilmaschine 1 entsprechend dem Einstellwert geändert wird. Der wenigstens eine Parameter umfasst z. B. eine Produktionsgeschwindigkeit, eine Abzugsgeschwindigkeit, eine Rotordrehzahl, eine Einspeisungsgeschwindigkeit und/oder einen Spinndruck oder Spinnunterdruck.

Es kann ferner ein zweiter Verfahrensschritt 102 vorgesehen sein, bei welchem ein Kontext der Bedienung zumindest auf Basis der ermittelten Eingabe ermittelt wird. Der Kontext kann zumindest eine Zuordnung der Bedienung zu dem wenigstens einen Parameter spezifizieren. Daher kann der Kontext auch als Zuordnungsinformation bezeichnet werden. Zur Ermittlung des Kontextes kann es notwendig sein, dass nicht nur die Informationen über die Bedienung vorliegen, sondern darüber hinaus noch Informationen über die Textilmaschine 1, vorzugsweise deren Produktion und/oder den wenigstens einen Parameter. Der Kontext kann bspw. dadurch ermittelt werden, dass die Bedienung ausgewertet wird, um zu ermitteln, in welcher Region der GUI 200 die Bedienung stattgefunden hat und/oder welches Bedienelement 210 der GUI 200 betätigt wurde. Zum Beispiel kann die Eingabe zur Angabe der Region und/oder des Bedienelements 210 einen Identifikator aufweisen, welcher bei dem Ermitteln des Kontextes abgefragt werden kann. Ferner ist es denkbar, dass zur Ermittlung des Kontextes die Bedienung, vorzugsweise der Identifikator, mit einer vordefinierten Zuordnungsvorgabe wie einer Tabelle verglichen wird. In der Zuordnungsvorgabe kann eine Zuordnung der Bedienung, vorzugsweise des Identifikators, zu dem wenigstens einem Parameter und/oder zu weiteren Faktoren vorgesehen sein. Die weiteren Faktoren können z. B. unterschiedliche Maschinenspezifikationen und/oder Statusspezifikationen umfassen, so dass die Zuordnung der Bedienung nicht nur zu dem Parameter, sondern auch zu einem aktuellen Zustand der Textilmaschine 1 und/oder Produktion erfolgen kann. Der aktuelle Zustand kann bspw. eine aktuelle Einstellung der Parameter und/oder Zielwerte wie eine gewünschte Produktionsgeschwindigkeit und/oder Qualitätsparameter wie z. B. eine aktuelle Fadenbruchrate und/oder einen Benutzerparameter umfassen. Somit kann die Zuordnung es ermöglichen, den Kontext als Repräsentation des aktuellen Produktionszustands bereitzustellen.

Anschließend kann gemäß einem dritten Verfahrensschritt 103 eine Unterstützungsinformation 220 zumindest auf Basis des ermittelten Kontextes ermittelt werden. Bspw. kann hierzu der konkreten Kombination der Faktoren, welche zuvor der Bedienung zugeordnet wurden, eine konkrete Unterstützungsinformation zugeordnet sein. Hierzu kann ebenfalls eine Zuordnungsvorgabe wie eine Tabelle vordefiniert sein und ausgewertet werden. Die Unterstützungsinformation 220 kann zur Assistenz des Benutzers für die Einstellung des wenigstens einen Parameters vorgesehen sein, und hierzu bspw. Hinweise oder Erläuterungen in Abhängigkeit vom dem Zustand der Textilmaschine 1 und/oder Produktion umfassen. Im Gegensatz zu herkömmlichen Lösungen kann daher durch die Berücksichtigung des Kontextes bei der Ermittlung der Unterstützungsinformation 220 eine Assistenz bereitgestellt werden, welche nicht nur statische Informationen zur Bedienung umfasst, sondern dynamisch an den aktuellen Zustand der Textilmaschine 1 und/oder Produktion angepasst wird.

Sodann kann gemäß einem vierten Verfahrensschritt 104 eine Assistenzfunktion ausgeführt werden, bei welcher eine Ausgabe der ermittelten Unterstützungsinformation 220 für den Benutzer initiiert wird. Dies ermöglicht es, eine sichere und zuverlässigere Bedienung der Textilmaschine 1 durch den Benutzer zu gewährleisten.

Um den Kontext zu ermitteln, kann es vorgesehen sein, dass eine Maschinenspezifikation identifiziert wird und/oder eine Statusspezifikation ermittelt wird. Die Maschinenspezifikation kann für einen Maschinenparameter, vorzugsweise eine Konfiguration und/oder einen Aufbau der Textilmaschine 1, und/oder für einen Produktionsparameter der Produktion spezifisch sein. Bspw. kann die Maschinenspezifikation die konkrete Einstellung der Parameter der Textilmaschine 1 angeben und/oder Produktionsparameter wie Zielwerte für ein Produktionsergebnis und/oder die Produktionsgeschwindigkeit angeben. Die Statusspezifikation kann für einen aktuellen Status der Textilmaschine 1 und/oder der Produktion spezifisch sein. Hierzu kann bspw. eine Messung durch wenigstens einen Sensor 40 an der Textilmaschine 1 durchgeführt werden, um den aktuellen Statuts zu ermitteln. Bspw. kann eine Fadenbruchrate oder dergleichen gemessen werden. Anschließend kann die Unterstützungsinformation 220 in Abhängigkeit von der Maschinenspezifikation und/oder der Statusspezifikation generiert werden. Sollte bspw. die Fadenbruchrate zu hoch sein, kann die Unterstützungsinformation 220 Hinweise für den Benutzer umfassen, wie der wenigstens eine Parameter eingestellt werden kann, um die Fadenbruchrate wieder zu verringern.

Es kann vorgesehen sein, dass zur Generierung der Unterstützungsinformation 220 in Abhängigkeit von dem Kontext und/oder von der Maschinenspezifikation und/oder der Statusspezifikation auf eine Wissensdatenbank zugegriffen wird. Die Wissensdatenbank kann als ein Expertensystem ausgeführt sein, um Vorschläge zur Einstellung der Parameter in Abhängigkeit von dem Kontext bereitzustellen. Bspw. kann in der Wissensdatenbank eine Zuordnung von verschiedenen Zuständen des Kontextes zu den zugehörigen Unterstützungsinformationen vordefiniert sein, sodass anhand des ermittelten Kontextes die passende Unterstützungsinformation ausgelesen werden kann. Für die Bereitstellung von Datenbanken sind eine Vielzahl elektronischer Lösungen bekannt. Der Abruf kann ferner über eine Sprache wie SQL durchgeführt werden.

Wenn die Eingabe einen Einstellwert für den wenigstens einen Parameter umfasst, kann nach der Eingabe durch den Benutzer ein Initiieren einer Änderung des wenigstens einen Parameters bei der Textilmaschine 1 gemäß dem Einstellwert vorgesehen sein. Dies ermöglicht es, eine Produktion der Textilmaschine 1 mit dem wenigstens einen durch den Einstellwert geänderten Parameter durchzuführen. Gleichzeitig kann der Benutzer über die Assistenzfunktion über die Auswirkungen dieser Änderung informiert werden. Es ist auch möglich, dass die Assistenzfunktion nicht nur informiert, sondern auch aktiv in die Änderung des wenigstens einen Parameters eingreifen kann. Die Ausführung 104 der Assistenzfunktion kann daher ein automatisches Anpassen, bevorzugt Korrigieren, des Einstellwertes zumindest auf Basis des ermittelten Kontextes umfassen. Somit ist es möglich, dass sich die Assistenzfunktion direkt auf den physikalischen Betrieb der Textilmaschine 1 auswirkt, indem der Parameter bei der Textilmaschine 1 geändert wird.

Die Unterstützungsinformation 220 kann zumindest einen Hinweis und/oder eine Empfehlung zur Einstellung des wenigstens einen Parameters, vorzugsweise zur Verwendung eines Bedienelements 210 der grafischen Benutzeroberfläche 200, umfassen und bevorzugt textil-technologisches Hintergrundwissen im Zusammenhang mit einer aktuellen Produktion der Textilmaschine 1 umfasst. Hierzu kann bei Betätigung eines Bedien- und vorzugsweise Eingabeelementes der GUI 200 einer Eingabe-Maske oder nach Antippen oder Anklicken eines Anzeigeelementes der GUI 200 die Unterstützungsinformation 220 z. B. visualisiert durch einen virtuellen Consultant automatisch in einem Pop-Up ausgegeben werden. Die Unterstützungsinformation 220 kann umfangreiche Erläuterungen zur aktuellen Funktion des Parameters oder dessen Kontext geben, dabei können auch technische oder textiltechnologische Hintergründen erläutert werden. Auch Informationen zu Berechnungen von Daten und der Auswirkung einer Veränderung des entsprechenden Parameters können vermittelt werden. Dies kann entweder in allgemeiner Form oder im Kontext zu bisherigen Einstellungen, Status der Maschine und/oder zur Produktion bzw. zum Produkt erfolgen. Die Unterstützungsinformation 220 kann auch Empfehlungen zu den Parameteränderungen im Kontext umfassen und Einstellungsvorschläge unterbreiten, um beispielsweise eine höhere Produktion zu bekommen oder eine bessere Qualität zu erreichen. Auch beim Abschluss einer Eingabe kann der Consultant zur Ausgabe der Unterstützungsinformation 220 ggf. automatisch erscheinen, um z. B. im Nachhinein getätigte Parameteränderungen zu erläutern oder zu korrigieren und eventuell Empfehlungen zu geben.

Es kann ferner ein sogenannter "Rookie-Modus" unterstützt werden, in dem die Assistenzfunktion aktiv ist, also bspw. der Consultant zur Ausgabe der Unterstützungsinformation 220 erscheint. Dieser kann z. B. jederzeit manuell aus- und eingeschaltet werden. Auch kann der Rookie-Modus für bestimmte Benutzer gezielt aktiviert und deaktiviert werden. Um den Consultant für den Benutzer attraktiver und persönlicher zu machen, kann dieser einen Namen oder eine Gestalt erhalten.

Das Ermitteln 102 des Kontextes kann ferner ein Ermitteln und Auswerten eines Benutzerparameters, vorzugsweise einer Erfahrung und/oder Qualifikation des Benutzers, umfassen. Dabei kann der Benutzerparameter bevorzugt auf Basis des Status und/oder des Qualitätsparameters ermittelt werden, bevorzugt anhand einer Fehlerrate, insbesondere einer Fadenbruchrate bei der Produktion. Diesem Vorgehen liegt die Erkenntnis zugrunde, dass der Umfang der Unterstützung durch die Assistenzfunktion von der Erfahrung und Qualifikation des Benutzers abhängig sein kann. Hierzu kann der Benutzerparameter z. B. eine Einstufung eines konkreten Benutzers in vorgegebene Kategorien umfassen. Diese Einstufung kann manuell eingegeben werden, aber auch optional automatisch ermittelt werden, z. B. proportional zur Fehlerrate. Es können für unterschiedliche Einstufungen unterschiedliche Unterstützungsinformationen 220 vorgesehen sein, z. B. mit unterschiedlichem Umfang der darin vorhandenen Informationen.

Darüber hinaus ist es möglich, dass die Unterstützungsinformation 220 eine Auswirkung der Einstellung des wenigstens einen Parameters entsprechend dem Einstellwert angibt. Hierzu kann bspw. eine Simulation durchgeführt werden, z. B. anhand eines Modells der Textilmaschine 1 und/oder der Produktion. Alternativ oder zusätzlich kann es vorgesehen sein, dass für verschiedene Einstellwerte die Auswirkungen vordefiniert sind, z. B. durch ein Expertensystem. Hierzu kann die Unterstützungsinformation 220 in Abhängigkeit von dem ermittelten Kontext aus einer Datensammlung, vorzugsweise einer elektronischen Datenbank, vorzugsweise über ein Netzwerk, abgerufen werden.

In Figur 2 ist ferner ein System 2 gemäß Ausführungsbeispielen der Erfindung dargestellt, aufweisend eine Textilmaschine 1, eine Anzeigevorrichtung wie ein Touchscreen 50 zur Darstellung der grafischen Benutzeroberfläche 200 und eine Vorrichtung 10 zur Datenverarbeitung, umfassend Mittel zur Ausführung des Verfahrens 100. Ferner kann das Computerprogramm 20 Befehle umfassen, die bei der Ausführung des Computerprogramms 20 durch die Vorrichtung 10 bzw. einen Computer 10 diese(n) veranlassen, das Verfahren 100 auszuführen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Textilmaschine
- 2: System

- 10: Vorrichtung, Computer

- 20: Computerprogramm

- 40: Sensor

- 50: Anzeigevorrichtung

- 60: Schnittstelle

- 100: Verfahren
- 101: erster Verfahrensschritt
- 102: zweiter Verfahrensschritt
- 103: dritter Verfahrensschritt
- 104: vierter Verfahrensschritt

- 200: grafischen Benutzeroberfläche
- 210: Bedienelement

- 220: Unterstützungsinformation

## Patentansprüche

1. Verfahren (100) zur computer-gestützten Assistenz bei einer Einstellung wenigstens eines Parameters wenigstens einer Textilmaschine (1), umfassend die nachfolgenden Schritte:
- Ermitteln (101) einer Eingabe eines Benutzers, wobei die Eingabe aus einer Bedienung einer grafischen Benutzeroberfläche (200) für die Einstellung des wenigstens einen Parameters resultiert,
- Ermitteln (102) eines Kontextes der Bedienung zumindest auf Basis der ermittelten Eingabe, wobei der Kontext zumindest eine Zuordnung der Bedienung zu dem wenigstens einen Parameter spezifiziert,
- Ermitteln (103) einer Unterstützungsinformation (220) zumindest auf Basis des ermittelten Kontextes, wobei die Unterstützungsinformation (220) zur Assistenz des Benutzers für die Einstellung des wenigstens einen Parameters vorgesehen ist,
- Ausführen (104) einer Assistenzfunktion, bei welcher eine Ausgabe der ermittelten Unterstützungsinformation (220) für den Benutzer initiiert wird.

2. Verfahren (100) nach Anspruch 1,
**dadurch gekennzeichnet,**
**dass** das Ermitteln (102) des Kontextes ferner zumindest einen der nachfolgenden Schritte umfasst:
- Identifizieren einer Maschinenspezifikation über die Textilmaschine (1) und/oder über eine Produktion der Textilmaschine (1), wobei die Maschinenspezifikation für einen Maschinenparameter, vorzugsweise eine Konfiguration und/oder einen Aufbau der Textilmaschine (1), und/oder für einen Produktionsparameter der Produktion spezifisch ist,
- Ermitteln einer Statusspezifikation, wobei die Statusspezifikation für einen aktuellen Status der Textilmaschine (1) und/oder der Produktion spezifisch ist, und vorzugsweise aus einer Messung durch einen Sensor (40) an der Textilmaschine (1) resultiert,
wobei der Kontext für die identifizierte Maschinenspezifikation und/oder die ermittelte Statusspezifikation spezifisch ist, wobei vorzugsweise die Unterstützungsinformation (220) in Abhängigkeit von der Maschinenspezifikation und/oder der Statusspezifikation generiert wird.

3. Verfahren (100) nach einem der vorhergehenden Ansprüche,
**dadurch gekennzeichnet,**
**dass** die Eingabe einen Einstellwert für den wenigstens einen Parameter umfasst, wobei der nachfolgende Schritt vorgesehen ist:
- Initiieren einer Änderung des wenigstens einen Parameters bei der Textilmaschine (1) gemäß dem Einstellwert, um eine Produktion der Textilmaschine (1) mit dem wenigstens einen geänderten Parameter durchzuführen,
wobei die Bedienung eine Betätigung eines Bedienelements (210), vorzugsweise eines Eingabeelements oder einer Eingabemaske, der grafischen Benutzeroberfläche (200) für die Eingabe des Einstellwertes umfasst.

4. Verfahren (100) nach Anspruch 3,
**dadurch gekennzeichnet,**
**dass** die Eingabe einen Einstellwert für den wenigstens einen Parameter umfasst, wobei das Ausführung (104) der Assistenzfunktion den nachfolgenden Schritt umfasst:
- Automatisches Anpassen, bevorzugt Korrigieren, des Einstellwertes oder eines weiteren Einstellwertes wenigstens eines weiteren Parameters der Textilmaschine (1) zumindest auf Basis des ermittelten Kontextes.

5. Verfahren (100) nach einem der vorhergehenden Ansprüche,
**dadurch gekennzeichnet,**
**dass** die Unterstützungsinformation (220) zumindest einen Hinweis und/oder eine Empfehlung zur Einstellung des wenigstens einen Parameters, vorzugsweise zur Verwendung eines Bedienelements (210) der grafischen Benutzeroberfläche (200), umfasst und bevorzugt textil-technologisches Hintergrundwissen im Zusammenhang mit einer aktuellen Produktion der Textilmaschine (1) umfasst.

6. Verfahren (100) nach einem der vorhergehenden Ansprüche,
**dadurch gekennzeichnet,**
**dass** das Ermitteln (102) des Kontextes zumindest einen der nachfolgenden Schritte umfasst:
- Auswerten der Eingabe hinsichtlich der Bedienung in der Form einer Berührung eines Touchscreens und/oder einer Mauszeiger-Position und/oder einer Betätigungsposition auf der grafischen Benutzeroberfläche (200),
- Ermitteln und Auswerten von der Eingabe vorangegangenen Eingaben,
- Ermitteln und Auswerten einer aktuellen Einstellung des wenigstens einen Parameters,
- Ermitteln und Auswerten eines durch die Eingabe mitgeteilten Änderungswunsches des Benutzers für die Einstellung des wenigstens einen Parameters,
- Ermitteln und Auswerten eines Status der Textilmaschine (1), vorzugsweise eines Betriebsstatus und/oder eines Status einer Produktion der Textilmaschine (1) und/oder eines Produktionsfortschritts,
- Ermitteln und Auswerten eines Qualitätsparameters einer Produktion der Textilmaschine (1),
- Ermitteln und Auswerten eines Benutzerparameters, vorzugsweise einer Erfahrung und/oder Qualifikation des Benutzers, wobei der Benutzerparameter bevorzugt auf Basis des Status und/oder des Qualitätsparameters ermittelt wird, bevorzugt anhand einer Fehlerrate, insbesondere einer Fadenbruchrate bei der Produktion.

7. Verfahren (100) nach einem der vorhergehenden Ansprüche,
**dadurch gekennzeichnet,**
**dass** der wenigstens eine Parameter zumindest einen der folgenden Parameter umfasst:
- eine Produktionsgeschwindigkeit,
- eine Abzugsgeschwindigkeit,
- eine Rotordrehzahl,
- eine Einspeisungsgeschwindigkeit,
- einen Spinndruck oder Spinnunterdruck.

8. Verfahren (100) nach einem der vorhergehenden Ansprüche,
**dadurch gekennzeichnet,**
**dass** die Eingabe einen Einstellwert für den wenigstens einen Parameter umfasst, wobei der nachfolgende Schritt vorgesehen ist:
- Ermitteln, vorzugsweise Simulieren, einer Auswirkung der Einstellung des wenigstens einen Parameters entsprechend dem Einstellwert,
wobei das Ermitteln (103) der Unterstützungsinformation (220) auf Basis der ermittelten Auswirkung erfolgt und vorzugsweise die Unterstützungsinformation (220) die Auswirkung angibt.

9. Verfahren (100) nach einem der vorhergehenden Ansprüche,
**dadurch gekennzeichnet,**
**dass** die Unterstützungsinformation (220) in Abhängigkeit von dem ermittelten Kontext aus einer Datensammlung, vorzugsweise einer elektronischen Datenbank, vorzugsweise über ein Netzwerk, abgerufen wird.

10. Verfahren (100) nach einem der vorhergehenden Ansprüche,
**dadurch gekennzeichnet,**
**dass** der nachfolgende Schritt vorgesehen ist:
- Ermitteln eines Benutzerparameters, welcher für eine Erfahrung und/oder Qualifikation des Benutzers spezifisch ist,
wobei das Ermitteln (102) des Kontextes basierend auf den ermittelten Benutzerparameter durchgeführt wird, sodass ein Umfang der Unterstützungsinformation (220) von dem ermittelten Benutzerparameter abhängig ist.

11. Verfahren (100) nach einem der vorhergehenden Ansprüche,
**dadurch gekennzeichnet,**
**dass** das Ausführen (104) der Assistenzfunktion die nachfolgenden Schritte umfasst:
- Identifizieren eines Einstellungsvorschlages basierend auf dem ermittelten Kontext,
- Initiieren der Ausgabe der Unterstützungsinformation (220), wobei die Unterstützungsinformation (220) den Einstellungsvorschlag umfasst,
- Ermitteln einer durch den Benutzer eingegebene Bestätigung des Einstellungsvorschlags, um die Einstellung entsprechend dem Einstellvorschlag vorzunehmen,
wobei vorzugsweise eine durch den Benutzer eingegebene Ablehnung des Einstellungsvorschlags ermittelt wird, und basierend auf der Ermittlung der Ablehnung der Einstellvorschlag angepasst und/oder verworfen wird.

12. Verfahren (100) nach einem der vorhergehenden Ansprüche,
**dadurch gekennzeichnet,**
**dass** die Ausgabe der ermittelten Unterstützungsinformation (220) für den Benutzer als eine Ausgabe einer Gestalt initiiert wird, welche, vorzugsweise in einem Bereich um ein Bedienelement (210), auf der grafischen Benutzeroberfläche (200) visualisiert wird.

13. System (2), aufweisend:
- eine Textilmaschine (1),
- eine Anzeigevorrichtung (50) zur Darstellung der grafischen Benutzeroberfläche (200),
- eine Vorrichtung (10) zur Datenverarbeitung, umfassend Mittel zur Ausführung des Verfahrens (100) nach einem der Ansprüche 1 bis 12.

14. Computerprogramm (20), umfassend Befehle, die bei der Ausführung des Computerprogramms (20) durch wenigstens einen Computer (10) diesen veranlassen, das Verfahren (100) nach einem der Ansprüche 1 bis 12 auszuführen.

15. Vorrichtung (10) zur Datenverarbeitung, umfassend Mittel zur Ausführung des Verfahrens (100) nach einem der Ansprüche 1 bis 12.
